# EUROPEAN PATENT SPECIFICATION

(11) **EP 3 059 032 B1**
(45) Date of publication and mention of the grant of the patent: **23.09.2020**
(21) Application number: 15155843.4
(22) Date of filing: 19.02.2015
(51) Int. Cl.: B33Y 80/00, B33Y 10/00, B22F 3/105, B22F 7/06, B22F 7/08, B29C 67/00

(54) **Component and method for manufacturing said component**
Komponente und Verfahren zur Herstellung dieser Komponente
Composant et procédé de fabrication dudit composant

(43) Date of publication of application: 24.08.2016
(73) Proprietor: Ansaldo Energia IP UK Limited, London W1G 9DQ (GB)
(72) Inventor: Loeffel, Kaspar, 8049 Zürich (CH); Maurer, Michael Thomas, 79713 Bad Säcki (CH); Haro, Juan Vicente, 5430 Wettingen (CH); Bossmann, Hans-Peter, 79787 Lauchring (CH)
(74) Representative: Bernotti, Andrea

(56) References cited:
- DE-A1-102013 013 335
- US-A1- 2011 256 416
- US-A1- 2013 266 816
- US-A1- 2013 323 473
- US-A1- 2014 165 381
- US-A1- 2014 361 447
- US-A1- 2015 037 162

## Description

### TECHNICAL FIELD

The present disclosure relates to a component as described in the preamble of claim 1, and further to a method for manufacturing said component as characterized in the independent method claim.

Said component may in certain embodiments be an engine component, in particular a component of a thermal power generation engine, and more in particular a component of a gas turbine engine. It may be a component intended for use in the hot gas path of a gas turbine engine such as disclosed in US2013/0266816A1.

### BACKGROUND OF THE DISCLOSURE

In many technological applications a good heat conductivity of certain components used may be required. This may be on the one hand for heat exchangers, but it may on the other hand also be the case for cooled engine components. If for instance a component is highly thermally loaded on one side and cooled on the other side, the cooling will become the more efficient the higher the thermal conductivity of the component is. Furthermore, if hot spots are present on the thermally loaded side, such as may for instance occur if a hot gas jet impinges on the hot gas side of a component, the temperature distribution in the component will be more evened out if the thermal conductivity of the component is high. Also, if the temperature distribution on the coolant side of the component is more evenly distributed, the coolant will be more efficiently used.

However, materials having a high thermal conductivity, such as for instance copper, may lack structural strength and resistance to operation under harsh operation conditions, in particular at elevated temperatures.

### SUMMARY OF THE DISCLOSURE

It is an object of the present disclosure to provide a component having both structural strength at high temperatures and high thermal conductivity. It is a further object of the present disclosure to provide a method for manufacturing said component.

This, besides other beneficial effects which may become apparent to the skilled person in view of the disclosure and explanations below, is achieved by means of the component as disclosed in claim 1 and by the method as claimed in the independent method claim.

Accordingly, a component is disclosed, the component comprising a first material and a second material, wherein a second member made from the second material is embraced by a first member made from the first material. That is to say, the second member made from the second material is held inside the first member made from the first material in a form locked manner. Thus, no welding or other bonding step between the two members made from different materials is required. This allows for instance the use of materials which may not or only very expensively and/or unreliably be bonded to each other and/or may be incompatible for welding, also taking into consideration a possible operation at elevated temperatures. It allows for example to combine metallic and non-metallic materials, for instance one of the members may be made from a metallic material and the other member may be made from a ceramic material. In certain embodiments, the first material may be a metallic material and the second material may be a metallic or ceramic material. The first material may in certain embodiments be a high temperature alloy, such as for instance a nickel base alloy. The second material may for instance, but not limited to, be copper, which would lack the required structural strength, in particular at elevated temperatures. However, as the mechanical performance of the component is provided by the first material, the mechanical properties of the second material are of minor relevance, if any at all.

The second member is fully enclosed by the first member. This may allow the use of a second member made from a material which would even liquefy at operational temperatures. In other embodiments, the second member may extend to a surface of the component. The second member may for instance extend to the coolant side of a hot gas path element of a gas turbine, which would enhance heat conduction from the component to the coolant side and consequently to the coolant. As noted and implied above, it might be found beneficial if the second material is chosen to have a higher thermal conductivity than the first component. In another aspect of the disclosure the second material may be chosen to have a higher thermal expansion coefficient than the first material. This would serve to effect an additional tight fit of the second member within the first member at elevated operational temperatures.

A component according to the present disclosure is characterized in that the first member is seamless, that is, a method for producing the component does not involve assembling the first member embracing the second member in joining two or more distinct pieces. The first member is said to be monolithic or one-piece. This is achieved in manufacturing the first member by an additive manufacturing process, as is lined out in more detail below. Said process may be one of, but not restricted to, a selective laser melting process and a selective electron beam melting process.

In still further exemplary embodiments of the component according to the present disclosure, the second member comprises at least one even surface and in particular has one of a constant or decreasing cross sectional dimension starting from at least one even surface. This may serve to facilitate manufacturing the component when applying certain manufacturing processes.

Further, a method is disclosed for manufacturing a component of the kind described above. The method comprises applying an additive manufacturing process and building up a first member from a first material by the additive manufacturing process. A second member made from a second material is added during the additive manufacturing process. Further first material is added to the first member by the additive manufacturing process after the second member has been provided, in particular covering the second member, thus embracing the second member.

Producing the first member comprises disposing a powder of the first material, melting the powder at selected locations, and re-solidifying the resulting melt to form the first member. Such manufacturing processes, as for instance selective laser melting or selective electron beam melting, are generally carried out bottom to top, in a vertical direction.

More particularly, the method comprises producing a first fragment of the first member, placing the second member, and subsequently adding further first material and covering the second member with first material such as to produce the first member to embrace the second member. Said in the present modes of carrying out the method comprise producing the first member fragment with a cavity, said cavity being accessible from outside the first member fragment, and said cavity in particular being shaped as a complementary or counterpart shape to the second member, and further comprising inserting the second member into said cavity. That is to say, in a first step producing the first member by means of the additive method starts and is carried out to a certain point. After that, the second member is put onto and/or inserted into the fragment of the first member which has so far been produced. In a subsequent step, production of the first member is continued, adding further first material embracing the second member. In certain embodiments, the first step of producing the first fragment of the first member comprises building up the first member such as to form a cavity which is shaped as a counterpart shape to the second member, and in which the second member is subsequently received to be flush with the first member. In case the buildup direction is bottom to top, a top end of the second member when placed in said cavity is flush with a top end of the first member first fragment. This might be found beneficial in subsequently recoating the component in continuing the additive manufacturing of the first member, which comprises covering the second member, and in particular covering the second member with a first material metal powder, which is subsequently molten and re-solidified.

The method may comprise selecting the second member such as to comprise at least one even surface, wherein a cross sectional dimension of the second member is constant or decreases starting from at least one even surface, and in particular placing the second member with said even surface on top. The second member may then be conveniently placed on an already produced fragment of the first member with the even surface. Due to the shape of the second member no undercuts will be present for following steps of adding first material. Likewise, the second member may be conveniently placed in a counterpart cavity manufactured in the first member first fragment, while it may be arranged to provide an even surface together with the first member fragment for a subsequent manufacturing step of adding first material.

Adding the second member may comprise placing the second member by means of a robot arm. This might be found useful and beneficial if the process is carried out in a closed process chamber, at controlled conditions, and/or under a shielding gas atmosphere.

It will be appreciated that the various modes of carrying out the teaching of the present disclosure disclosed above may be readily combined with each other. Further embodiments and benefits of the teaching given above and/or claimed may become readily apparent to the skilled person.

### BRIEF DESCRIPTION OF THE DRAWINGS

The subject matter of the present disclosure is now to be explained in more detail by means of exemplary embodiments shown in the accompanying drawings. The figures show
- Fig. 1: a prior art component (Fig. 1a) and a component according to the present disclosure (Fig. 1b);
- Fig. 2: two modes (Fig. 2a, Fig. 2b) of manufacturing a component according to the present disclosure;
- Fig. 3: a plan view of an intermediate state of the manufacturing process;
- Fig. 4: a further exemplary embodiment of a component; not part of the present disclosure;
- Fig. 5 of: still a further exemplary embodiment of a component not part the present disclosure.

It is understood that the drawings are highly schematic, and details not required for the technical explanations may have been omitted for the ease of understanding and depiction. It is further understood that the drawings show only selected, illustrative embodiments by way of example, and numerous embodiments not shown may still be well within the scope of the herein claimed subject matter.

### EXEMPLARY MODES OF CARRYING OUT THE TEACHING OF THE PRESENT DISCLOSURE

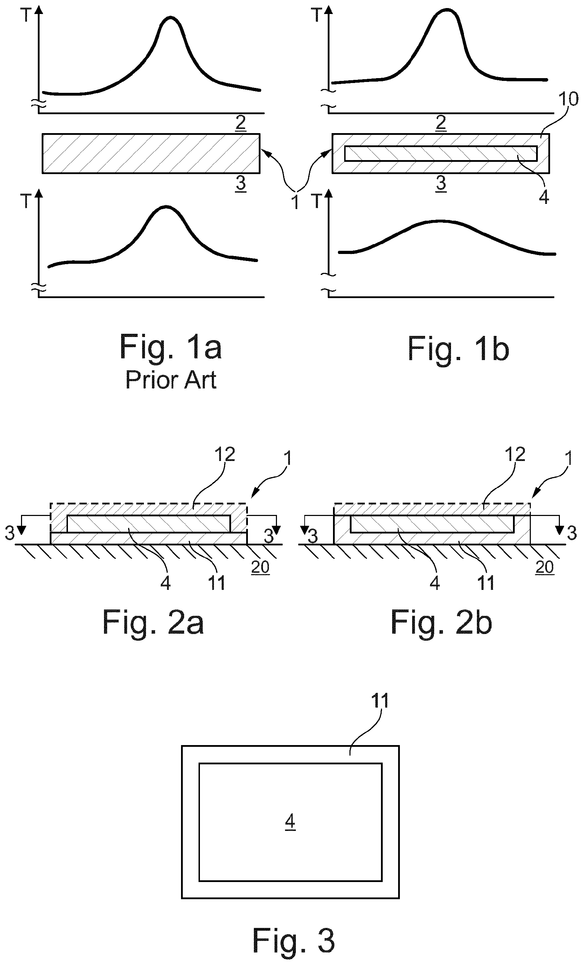

Figure 1 depicts exemplary temperature distributions on the hot gas side and on the coolant side of a component according to the prior art and according to the present disclosure. In both, figure 1a) and figure 1b), a component 1 is shown which might be used in a hot gas path of a gas turbine engine. The component may in particular be made from a high temperature alloy, such as for instance a nickel base alloy. Component 1 comprises a hot gas side 2 which is intended to face a hot gas flow, and a coolant side 3, which is intended to face a coolant flow. Moreover, exemplary temperature distributions on the surfaces of hot gas side 2 and coolant side 3 are shown. The temperature T distribution on the hot gas side may be dominated by a hot spot, as indicated by the peak in the temperature distribution on the hot gas side. As is seen in the lower part of figure 1a), the temperature distribution only marginally evens out over the small distance from the hot gas side 2 to the coolant side 3 in the case of a component homogeneously consisting of one material only. Figure 1b) depicts a component 1 according to the present disclosure. Component 1 comprises a first member 10 which is made from the same alloy as the prior art component shown in figure 1a). The first member 10 embraces a second member 4 made from a second material. The second member 4 being embraced by the first member 10 means, that the first member 10 form-locks the second member 4. As member 4 is held in place within member 10 by form-locking, no bonding connection between first member 10 and second member 4 is required. This means, that the second material of which second member 4 consists needs not to be compatible with the first material of which member 10 consists e.g. for welding. Also, no bonding agent which might be subject to fail at elevated temperatures needs to be applied for connecting the two members 4 and 10. Moreover, the structural strength of component 1, and in particular the structural strength of the component at elevated temperatures, may completely be provided by the first member 10. Summarizing, a great freedom of choice for the material used for second member 4 is provided. In particular, first member 10 may completely enclose second member 4, such that any external surface of component 1 is provided by first member 10, which in turn means, that only first member 10 consisting of the first material is in contact with the environment, which might be hot and/or aggressive fluids. Being completely enclosed by the first member means that the material used for second member 4 needs not to fulfill any requirements as to the durability of the second member under the conditions under which component 1 is used during operation. This further increases the freedom of choice for the material used for second member 4. Second member 4 may consist for instance of a material having a high thermal conductivity, that is in particular having a higher thermal conductivity than the first material. Such a second material may for instance be copper; also a non-metallic, e.g. ceramic, material might be chosen, or, if the second member 4 is completely enclosed by the first member 10, even a material might be chosen which would liquefy during operation of component 1 in the hot gas path of an engine. As a result of applying a plate- or layer-shaped second member 4 being embraced in a first member 10 to form a component 1, wherein second member 4 is made from a material having a higher heat conduction coefficient than the material from which the first member 10 is made, the heat conducted through component 1 from the hot gas side 2 to the coolant side 3 will be laterally distributed in case the component 1 is exposed to an uneven temperature distribution on its hot gas side. The temperature distribution on the coolant side, shown in the lower part of figure 1 b) thus evens out, with the temperature peak being lowered and the temperature of lateral regions being elevated as compared to the case shown in figure 1a). The thermal loading of component 1 is thus more evenly distributed over the component, and moreover a coolant flow flowing over the coolant side 3 is more efficiently used. It should be noted that, dependent on the heat transfer characteristics between the hot gas flow and the hot gas side 2 of component 1, even the temperature distribution of the component on the hot gas side 2 might be less uneven due to the distribution of heat in second member 4.

In the following, a method for manufacturing a component according to the present disclosure is illustrated. In order to manufacture the component such that the second member is embraced or in particular enclosed by the first member, the first member needs to be manufactured in a way in which it is able to encase the second member during the manufacturing process. As the second member is embraced or enclosed by the first member 10, there is no access to insert the second member into the first member once the production of the first member is finished. One way of doing that might be to assemble the first member 10 from individual pieces. These might for instance be welded together. However, the process of assembling the component in that way might turn out expensive, and moreover the material used for the first member 10, such as for instance high temperature alloys, might be difficult to weld and/or to machine. Thus, it is proposed to manufacture the component 1 in applying an additive manufacturing process, such as for instance selective laser melting or selective electron beam melting.

Figure 2 depicts exemplary modes (Fig. 2a and Fig. 2b) of manufacturing a component 1 in applying an additive manufacturing process to build the first member. Firstly, a first fragment 11 of the first member is manufactured on a build platform 20 by an additive manufacturing method. Examples of additive manufacturing methods are per se known in the art and thus do not require detailed explanations. The method may for instance comprise disposing a layer of metal powder on the build platform, selectively melting and re-solidifying the powder at selective locations, recoating the layer of solid material thus produced with a new layer of metal powder, and again melting and re-solidifying the material which has been disposed on the preceding layer of solidified material. After having repeated that disposing, melting and re-solidifying process a multitude of times, a first fragment 11 of the first member has been produced. In the embodiment shown in figure 2a), a flat fragment 11 has been produced, while in the embodiment shown in figure 2b) a tub-shaped fragment 11 has been produced, which comprises a cavity. In the next step, a second member 4 consisting of a second material, being different from the material which is used to build the first member, is placed onto the fragment 11 in figure 2a), or into the cavity formed in tub-shaped fragment 11 in figure 2b). To this extent the cavity in fragment 11 may have been manufactured to exhibit a complementary shape to second member 4. As the additive manufacturing process might take place in a closed processing chamber, placing the second member 4 may in particular be done by a robot arm. In the embodiment shown in figure 2b), the first fragment may be manufactured such, and the thickness of the second member 4 may be chosen such, that the second member 4 and the fragment 11 are flush with each other on their top ends. The cavity and the second member 4 might have shapes complementary to each other. This might facilitate a subsequent recoating step, that is, placing a layer of metal powder immediately onto the second member 4 and the fragment 11. To this extent, the second member 4 in the embodiment provided here has an even surface, in particular an even top surface. In consecutive steps, the additive production of the first member is continued, in placing consecutive layers of metal powder, which is the same material as used for manufacturing the fragment 11, besides the second member 4, or on top of it, respectively, and melting and re-solidifying the material in each layer. The resulting structure produced by the additive manufacturing process after the second member 4 has been placed is indicated at 12. Figure 3 depicts a plan view onto the build platform after the second member 4 has been placed. The respective sections are marked accordingly in figures 2a) and 2b). As is seen, after the production is finished, the second member 4 will be completely enclosed by the first member. In applying an additive manufacturing process to build the first member of component 1, said first member can be built in a seamless manner, that is, as a monolithic, one-piece member embracing the second member.

It should be noted, that due to the shrinking of material of the first member while it re-solidifies during the manufacturing process, a tight fit of the second member within the first member may be achieved. Moreover, if component 1 is intended for operation at elevated temperatures, and the thermal expansion coefficient of the second material of which the second member consists is higher than the thermal expansion coefficient of the first material of which the embracing first member consists, said tight fit will be fostered during operation. Eventual rattling of the second member inside the first member may thus be avoided.

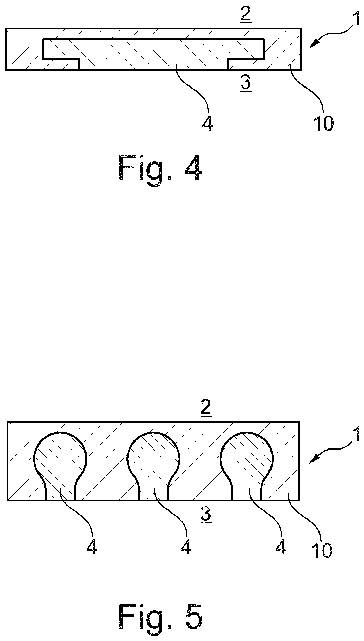

Figures 4 and 5 show further embodiments not part of the present invention of components 1 according to the present disclosure. In both cases, the second member 4 extends to the surface of component 1. Second member 4 is shaped such as to be still embraced by the first member 10, while not being completely enclosed. In particular, if a second member 4 being made from a material having a higher thermal conductivity than the material from which a first member 10 is made extends to a coolant surface or side 3 of the component 1, the conduction of heat towards the cooling side may be enhanced. In the embodiment of figure 4, the second member 4 is roughly plate- or layer-shaped and extends to the coolant site 3. In the embodiment of figure 5 a multitude of pear-shaped second members are arranged and extend to the coolant side 3 of component 1.

While the subject matter of the disclosure has been explained by means of exemplary embodiments, it is understood that these are in no way intended to limit the scope of the claimed invention. It will be appreciated that the claims cover embodiments not explicitly shown or disclosed herein, and embodiments deviating from those disclosed in the exemplary modes of carrying out the teaching of the present disclosure will still be covered by the claims.

### LIST OF REFERENCE NUMERALS

- 1: component
- 2: hot gas side
- 3: coolant side
- 4: second member
- 10: first member
- 11: first member fragment
- 12: first member fragment (resulting structure)
- 20: build platform

- T: Temperature

## Claims

1. A gas turbine engine component (1) having a hot gas side (2) which is intended to face a hot gas flow, and a coolant side (3) which is intended to face a coolant flow; said component (1) comprising a monolithic first member (10) which is made of a first material via an additive manufacturing method, and a second member (4) which is made of a second material having a thermal conductivity higher than that of said first material, and is form-locked into said first member (10), **characterized in that** the second member (4) is plate- or layer- shaped and is fully enclosed by the first member (10), the first member (10) has a cavity in which the second member (4) is located, wherein the cavity and the second member (4) have shapes complementary to each other.

2. The gas turbine engine component according to any of the preceding claims, **characterized in that** the second material has a thermal expansion coefficient higher than that of the first material.

3. The gas turbine engine component according to any of the preceding claims, **characterized in that** the second member (4) comprises at least one even surface and in particular has one of a constant or decreasing cross sectional dimension starting from at least one even surface.

4. A method of manufacturing a component of a gas turbine engine having a hot gas side (2) which is intended to face a hot gas flow, and a coolant side (3) which is intended to face a coolant flow; said component (1) comprising a monolithic first member (10) which is made of a first material, and a second member (4) which is plate- or layer- shaped, is form-locked into said first member (10) and is made of a second material having a thermal conductivity higher than that of said first material; the method being **characterized by** comprising the steps of: producing a first fragment (11) of said first member (10) via an additive manufacturing process; placing the second member (4) onto said first fragment (11); subsequently adding via said additive manufacturing process further first material (12) so as to complete the first member (10) and at same time completely enclosing the second member (4), wherein the step of producing the first fragment (11) of the first member (10) includes the step of forming into said first fragment (11) a cavity which is accessible from outside said first fragment (11), and is complementary in shape to the second member (4).

5. The method according to claim 4, **characterized in that** placing the second member (4) onto said first fragment (11) includes the step of inserting the second member (4) into said cavity.

6. The method according to any one of claim 4 or 5, **characterized in that** placing the second member (4) on said first fragment (11) comprises placing the second member (4) onto or into said first fragment (11) by means of a robot arm.

7. The method according to any one of claims 4-6, **characterized in that** producing the first member (10) comprises disposing a powder of the first material, melting the powder at selected locations, and re-solidifying the resulting melt to form the first member.

8. The method according to any one of claims 4-7, **characterized in** selecting the second member (4) such as to comprise at least one even surface wherein a cross sectional dimension of the second member is constant or decreases starting from at least one even surface, and in particular placing the second member with said even surface on top.

9. The method according to any one of claims 4-8, **characterized in that** manufacturing the first member (10) comprises one of a selective laser melting process and a selective electron beam melting process.

## Patentansprüche

1. Komponente (1) eines Gasturbinentriebwerks mit einer Heißgasseite (2), die einer Heißgasströmung zugewandt sein soll, und einer Kühlmittelseite (3), die einer Kühlmittelströmung zugewandt sein soll; wobei die Komponente (1) ein monolithisches erstes Element (10), das aus einem ersten Material durch ein additives Herstellungsverfahren hergestellt ist, und ein zweites Element (4) aufweist, das aus einem zweiten Material mit einer höheren Wärmeleitfähigkeit als die des ersten Materials hergestellt ist und formschlüssig mit dem ersten Element (10) verbunden ist, **dadurch gekennzeichnet, dass** das zweite Element (4) platten- oder schichtförmig und vollständig von dem ersten Element (10) umschlossen ist, das erste Element (10) einen Hohlraum aufweist, in dem das zweite Element (4) angeordnet ist, wobei der Hohlraum und das zweite Element (4) zueinander komplementäre Formen aufweisen.

2. Komponente eines Gasturbinentriebwerks nach einem der vorhergehenden Ansprüche, **dadurch gekennzeichnet, dass** das zweite Material einen Wärmeausdehnungskoeffizienten aufweist, der höher ist als der des ersten Materials.

3. Komponente eines Gasturbinentriebwerks nach einem der vorhergehenden Ansprüche, **dadurch gekennzeichnet, dass** das zweite Element (4) mindestens eine ebene Fläche aufweist und insbesondere eine konstante oder eine abnehmende Querschnittsabmessung ausgehend von mindestens einer ebenen Fläche hat.

4. Verfahren zum Herstellen einer Komponente eines Gasturbinentriebwerks mit einer Heißgasseite (2), die einer Heißgasströmung zugewandt sein soll, und einer Kühlmittelseite (3), die einer Kühlmittelströmung zugewandt sein soll; wobei die Komponente (1) ein monolithisches erstes Element (10), das aus einem ersten Material hergestellt ist, und ein zweites Element (4) aufweist, das platten- oder schichtförmig ist, in das erste Element (10) formschlüssig eingeschlossen ist und hergestellt ist aus einem zweiten Material mit einer Wärmeleitfähigkeit, die höher ist als die des ersten Materials; wobei das Verfahren **dadurch gekennzeichnet ist, dass** es die Schritte umfasst:
Herstellen eines ersten Fragments (11) des ersten Elements (10) durch ein additives Herstellungsverfahren;
Platzieren des zweiten Elements (4) auf dem ersten Fragment (11) ;
anschließendes Hinzufügen von weiterem ersten Material (12) durch das additive Herstellungsverfahren, um so das erste Element (10) zu vervollständigen und gleichzeitig das zweite Element (4) vollständig zu umschließen, wobei der Schritt des Herstellens des ersten Fragments (11) des ersten Elements (10) den Schritt des Ausbildens eines Hohlraums in das erste Fragment (11) einschließt, der von außerhalb des ersten Fragments (11) zugänglich ist und eine zum zweiten Element (4) komplementäre Form hat.

5. Verfahren nach Anspruch 4, **dadurch gekennzeichnet, dass** das Platzieren des zweiten Elements (4) auf das erste Fragment (11) den Schritt des Einführens des zweiten Elements (4) in den Hohlraum umfasst.

6. Verfahren nach einem der Ansprüche 4 oder 5, **dadurch gekennzeichnet, dass** das Platzieren des zweiten Elements (4) auf dem ersten Fragment (11) das Platzieren des zweiten Elements (4) auf oder in dem ersten Fragment (11) mittels eines Roboterarms umfasst.

7. Verfahren nach einem der Ansprüche 4-6, **dadurch gekennzeichnet, dass** das Herstellen des ersten Elements (10) das Aufbringen eines Pulvers aus dem ersten Material, das Schmelzen des Pulvers an ausgewählten Stellen und das Wiederverfestigen der resultierenden Schmelze zur Bildung des ersten Elements umfasst.

8. Verfahren nach einem der Ansprüche 4 bis 7, **dadurch gekennzeichnet, dass** das zweite Element (4) so ausgewählt wird, dass es mindestens eine ebene Oberfläche aufweist, wobei eine Querschnittsabmessung des zweiten Elements ausgehend von mindestens einer ebenen Oberfläche konstant ist oder abnimmt, und dass insbesondere das zweite Element mit der ebenen Oberfläche darauf platziert wird.

9. Verfahren nach einem der Ansprüche 4 bis 8, **dadurch gekennzeichnet**, das die Herstellung des ersten Elements (10) entweder ein selektives Laserschmelzverfahren oder ein selektives Elektronenstrahlschmelzverfahren umfasst.

## Revendications

1. Composant de moteur à turbine à gaz (1) ayant un côté gaz chaud (2) qui est destiné à faire face à un flux de gaz chaud, et un côté réfrigérant (3) qui est destiné à faire face à un flux de réfrigérant; ledit composant (1) comprenant un premier élément monolithique (10) qui est composé d'un premier matériau via un procédé de fabrication additive, et un second élément (4) qui est composé d'un second matériau ayant une conductivité thermique supérieure à celle dudit premier matériau, et est bloqué par complémentarité de formes dans ledit premier élément (10), **caractérisé en ce que** le second élément (4) est en forme de plaque ou couche et est totalement enfermé par le premier élément (10), le premier élément (10) a une cavité dans laquelle est situé le second élément (4), dans lequel la cavité et le second élément (4) ont des formes complémentaires l'une de l'autre.

2. Composant de moteur à turbine à gaz selon l'une quelconque des revendications précédentes, **caractérisé en ce que** le second matériau a un coefficient de dilatation thermique supérieur à celui du premier matériau.

3. Composant de moteur à turbine à gaz selon l'une quelconque des revendications précédentes, **caractérisé en ce que** le second élément (4) comprend au moins une surface régulière et a en particulier l'une d'une dimension en section transversale constante ou décroissante en partant d'au moins une surface régulière.

4. Procédé de fabrication d'un composant d'un moteur à turbine à gaz comportant un côté gaz chaud (2) qui est destiné à faire face à un flux de gaz chaud, et un côté réfrigérant (3) qui est destiné à faire face à un flux de réfrigérant ; ledit composant (1) comprenant un premier élément monolithique (10) qui est composé d'un premier matériau, et un second élément (4) qui est en forme de plaque ou couche et est bloqué par complémentarité des formes dans ledit premier élément (10) et est composé d'un second matériau présentant une conductivité thermique supérieure à celle dudit premier matériau ; le procédé étant **caractérisé en ce qu'**il comprend les étapes de : production d'un premier fragment (11) dudit premier élément (10) via un processus de fabrication additive ; mise en place du second élément (4) sur ledit premier fragment (11) ; ajout ultérieur via ledit processus de fabrication additive d'un autre premier matériau (12) de sorte à compléter le premier élément (10) et à enfermer simultanément complètement le second élément (4), dans lequel l'étape de production du premier fragment (11) du premier élément (10) inclut l'étape de formation dans ledit premier fragment (11) d'une cavité qui est accessible depuis l'extérieur dudit premier fragment (11), et a une forme complémentaire à celle du second élément (4).

5. Procédé selon la revendication 4, **caractérisé en ce que** la mise en place du second élément (4) sur ledit premier fragment (11) inclut l'étape d'insertion du second élément (4) dans ladite cavité.

6. Procédé selon l'une quelconque de la revendication 4 ou 5, **caractérisé en ce que** la mise en place du second élément (4) sur ledit premier fragment (11) comprend la mise en place du second élément (4) sur ou dans ledit premier fragment (11) au moyen d'un bras de robot.

7. Procédé selon l'une quelconque des revendications 4 à 6, **caractérisé en ce que** la production du premier élément (10) comprend le dépôt d'une poudre du premier matériau, la fusion de la poudre à des endroits sélectionnés et la resolidification du produit fondu résultant pour former le premier élément.

8. Procédé selon l'une quelconque des revendications 4 à 7, **caractérisé par** la sélection du second élément (4) de sorte à ce qu'il comprenne au moins une surface régulière, dans lequel une dimension en section transversale du second élément est constante ou diminue en partant d'au moins une surface régulière, et en particulier, la mise en place du second élément avec ladite surface régulière dessus.

9. Procédé selon l'une quelconque des revendications 4 à 8, **caractérisé en ce que** la fabrication du premier élément (10) comprend l'un d'un processus de fusion sélective au laser et d'un processus de fusion sélective par faisceaux d'électrons.
